# EUROPÄISCHE PATENTANMELDUNG

(11) **EP 3 623 706 A1**
(43) Veröffentlichungstag der Anmeldung: **18.03.2020**
(21) Anmeldenummer: 19196337.0
(22) Anmeldetag: 10.09.2019
(51) Int. Cl.: F24C 15/00, F24C 15/18, F24C 15/08, A21B 3/00

(54) **GARGERÄTEANORDNUNG, INSBESONDERE GEWERBLICHE GARGERÄTEANORDNUNG**

(30) Priorität: 11.09.2018 DE 102018215443
(71) Anmelder: Convotherm Elektrogeräte GmbH, 82436 Eglfing (DE)
(72) Erfinder: WILD, Hannes, 82418 Riegsee (DE); STROH, Konstantin, 82418 Murnau am Staffelsee (DE)
(74) Vertreter: Hoefer & Partner Patentanwälte mbB

(57) **Zusammenfassung**

Die Erfindung betrifft eine Gargeräteanordnung (1), insbesondere gewerbliche Gargeräteanordnung mit zumindest einem Gargerät (2, 3) und mit einem Untergestell (4), auf dem das zumindest eine Gargerät (2, 3) angeordnet ist, und mit einem Aufnahmebereich (5) für Gargeräte-Zubehör, wie insbesondere Flüssigkeitsbehälter (FB1, FB2), Wasseraufbereitungspatronen (P), Zuführ- und Abführleitungen (L), der im Untergestell (4) platzierbar ist, wobei der Aufnahmebereich (5) als in das Untergestell (4) ein- und aus dem Untergestell (4) ausfahrbare Schublade ausgebildet ist, dadurch gekennzeichnet, dass die Schublade (5) mit einem einzigen Hartwasseranschluss (23) versehen ist.

## Beschreibung

Die Erfindung betrifft eine Gargeräteanordnung, insbesondere in Form einer gewerblichen Gargeräteanordnung, gemäß dem Oberbegriff des Anspruchs 1. Eine derartige Geräteanordnung ist aus der DE 10 2010 017 177 A1 oder der WO 2004/094912 A1 bekannt.

Eine derartige Gargeräteanordnung weist zumindest ein Gargerät auf. Es ist jedoch auch möglich, dass eine Mehrzahl von Gargeräten, in der Regel zwei Gargeräte übereinandergestapelt werden, wobei unter Umständen auf dem oberen Gargerät zusätzlich eine Abzugshaube angeordnet werden kann.

Um für eine gute Ergometrie eine optimale Verteilung der Einschubhöhen, insbesondere beim Vorsehen von mehreren Garräumen, möglich zu machen, wird das unterste Gargerät auf ein Untergestell aufgesetzt, in dem bei der gattungsgemäßen Gargeräteanordnung ein Aufnahmebereich integriert ist, in dem Gargeräte-Zubehör untergebracht werden kann.

Da aus Hygienegründen auch der Bereich, in dem die Gargeräteanordnung platziert ist, regelmäßig gereinigt werden muss, ist es bei der gattungsgemäßen Gargeräteanordnung erforderlich, die gesamte Einheit vom Aufstellort weg zu bewegen, diesen anschließend frei gewordenen Aufstellbereich zu reinigen und danach die gesamte Gargeräteanordnung wieder in den Aufstellbereich zurück zu bewegen.

Es ist ersichtlich, dass dies einen enormen Aufwand darstellt, da die gattungsgemäße Gargeräteanordnung zusammen mit ihrem Aufnahmebereich ein erhebliches Gewicht hat, das das Entfernen und wieder Zurückbefördern der Gargeräteanordnung in den Aufstellbereich erheblich erschwert.

Es ist daher Aufgabe der vorliegenden Erfindung, eine Gargeräteanordnung, insbesondere in Form einer gewerblichen Gargeräteanordnung, der im Oberbegriff des Anspruchs 1 angegebenen Art zu schaffen, die eine leichte, selbst tägliche, Reinigung des Aufstellbereichs unterhalb der Gargeräteanordnung möglich macht.

Die Lösung dieser Aufgabe erfolgt durch die Merkmale des Anspruchs 1.

Dadurch, dass der Aufnahmebereich als ein- und ausfahrbare Schublade, die auch als Aufnahmeschlitten bezeichnet werden kann, ausgebildet ist, ergibt sich eine Entkopplung zwischen dem Aufnahmebereich und dem Untergestell, was es auf äußerst einfache Art und Weise möglich macht, den Aufstellbereich der erfindungsgemäßen Gargeräteanordnung zugänglich zu machen, was einfach durch das Herausfahren des Aufnahmebereichs aus dem Untergestell geschieht, das bei diesem Herausfahren der Aufnahmeschublade natürlich an seinem Platz verbleibt, den Aufstellbereich unterhalb der Gargeräteanordnung jedoch leicht zugänglich macht, um eine Reinigung dieses Aufstellbereichs durchführen zu können.

Ein weiterer Vorteil durch die erfindungsgemäße Ausbildung des Aufnahmebereichs als Schublade bzw. Aufnahmeschlitten ist die Möglichkeit, die Wasseraufbereitungspatronen, die ein Teil des Gargeräte-Zubehörs sein können, von vorne wechseln zu können, was wesentlich einfacher ist, als ein Entfernen bzw. Wechseln dieser Patronen vom hinteren Bereich der Gargeräteanordnung aus.

Ein weiterer Vorteil ist darin zu sehen, dass durch die leichte Zugänglichkeit des Aufstellbereichs die Betriebskosten erheblich vermindert werden können, da kein aufwändiges Bewegen der gesamten Gargeräteanordnung mehr erforderlich ist.

Ferner ist die Schublade erfindungsgemäß mit einem einzigen Hartwasseranschluss versehen. Dies ergibt den Vorteil, dass über diesen einzigen Hartwasseranschluss, der dementsprechend auch nur eine einzige Hartwasserzuführleitung erfordert, Hartwasser beispielsweise in die Wasseraufbereitungspatrone eingeleitet werden kann. Durch ein Abzweigteil kann im Bedarfsfall das Hartwasser unter Umgehung der Patrone direkt in eines oder beide Gargeräte, falls zwei Gargeräte übereinandergestapelt sind, eingeleitet werden. Der in die Patrone eingeleitete Hartwasseranteil kann in dieser behandelt werden, so dass danach entstandenes Weichwasser über ein Verteilerelement, wie beispielsweise ein T-Stück im Falle zweier übereinandergestapelter Gargeräte sowohl dem unteren wie dem oberen Gargerät über eine einzige Weichwasserleitung zugeführt werden kann.

Diese Anordnung kann bei übereinandergestapelten Gargeräten einer Gargeräteanordnung sowohl in der zuvor beschriebenen Schublade angeordnet sein oder auch in einem schubladenfreien Untergestell angeordnet werden, falls im Untergestell keine Zubehörteile für das Gargerät bzw. die Gargeräte vorgesehen sind.

Die Unteransprüche haben vorteilhafte Weiterbildungen der Erfindung zum Inhalt.

Bei einer besonders bevorzugten Ausführungsform weist die fahrbare Schublade einen auf Rollen angebrachten Rahmen auf. Üblicherweise können vier Rollen in den Eckbereichen dieses Rahmens angebracht werden, so dass die Schublade sehr leichtgängig ist und damit einfach und mit geringem Kraftaufwand bewegt werden kann. Als Alternativen für Rollen können Schwerlastschienen oder Gleitschienen vorgesehen sein.

Im Rahmen kann bei einer weiteren bevorzugten Ausführungsform eine Aufnahmeplatte angeordnet sein, die in Aufnahmeabschnitte für die unterschiedlichen Gargeräte-Zubehörteile unterteilbar ist. Hierfür ist es beispielsweise möglich, Unterteilungswände vorzusehen, die entweder an die Größe der aufzunehmenden Zubehörteile angepasst ist oder die auf der Aufnahmeplatte verschiebbar sind, wie beispielsweise durch eine Führung in Langlöchern und eine Fixierung durch Feststellschrauben, so dass die Unterteilung für die Aufnahmeabschnitte variabel ausgestaltet ist. Zu den Zubehörteilen können neben Flüssigkeitsbehältern für Reinigungsmittel und Klarspüler und/oder Wasseraufbereitungspatronen Reservebehälter für Flüssigkeiten und/oder Fettabscheidebehälter vorgesehen sein.

Vorzugsweise ist am Rahmen ferner bei einer weiteren besonders bevorzugten Ausführungsform eine frontseitige Abdeckplatte angeordnet, die im eingefahrenen Zustand der Schublade mit der Frontseite der Gargeräteanordnung fluchtet, so dass sich eine einheitliche optische Anmutung ergibt, die hohen ästhetischen Anforderungen genüge tut.

Um das Herausziehen der Schublade zu erleichtern, ist bei einer weiteren besonders bevorzugten Ausführungsform an der Abdeckplatte ein Griff angeordnet, der von einer Bedienperson auf einfache Art und Weise ergriffen werden kann.

Bevorzugterweise sind die Aufnahmeabschnitte für Flüssigkeitsbehälter, wie beispielsweise für Klarspüler und/oder für flüssiges Reinigungsmittel und/oder Reservebehälter und/oder Fettabscheider, benachbart zur Abdeckplatte angeordnet, da es dadurch bei einer weiteren besonders bevorzugten Ausführungsform möglich ist, Füllstandsschlitze in einem Bereich der Abdeckplatte anzuordnen, der den Aufnahmeabschnitten für die Flüssigkeitsbehälter benachbart ist. Hierbei ist es vorzugsweise möglich, eine der Anzahl der Flüssigkeitsbehälter entsprechende Anzahl von Füllstandsschlitzen in der Abdeckplatte vorzusehen, wobei sichergestellt werden kann, dass je nach Verwendung von einem, zwei oder drei Behältern jeweils der Füllstand der eingebrachten Behälter ersichtlich und damit überprüfbar ist.

Um die eingeschobene Position der Schublade auf einfache Art und Weise sichern zu können, kann am Rahmen zumindest eine Haltefeder, jedoch in der Regel ein Paar von Haltefedern angeordnet werden, die mit einem bzw. zwei Haltestiften zusammenwirken kann, die am Untergestell fixiert sind. Um den eingeschobenen Zustand zu sichern, sind diese Haltefeder bzw. diese Haltefedern nahe der Abdeckplatte angeordnet, wobei die Haltefeder einen Halteabschnitt aufweist, der einen einstellbaren Abstand zum Rahmen einnehmen kann, so dass dieser Halteabschnitt zurückfedern kann, wenn die Feder beim Einfahren der Schublade den jeweiligen Haltestift berührt. Im eingefahrenen Zustand hintergreift dann der Haltestift bzw. die Haltestifte die Feder bzw. die Federn und sichert damit die in das Untergestell eingefahrene Position der verfahrbaren Schublade.

Ferner ist es möglich, an dem Untergestell zugewandten Endbereich des Rahmens zusätzlich zumindest ein Rückhalteteil, beispielsweise in Form eines vom Rahmen aufstehenden Rückhaltblechs vorzusehen, das ebenfalls mit dem zuvor erwähnten Haltestift bzw. den Haltestiften, falls zwei derartige Rückhalteteile vorgesehen sind, zusammenwirken kann. Dieses Rückhalteteil bildet einen Anschlag, wenn der Schlitten bzw. die Schublade aus dem Untergestell herausgefahren wird, wobei zum vollständigen Entfernen der Schublade vom Untergestell die Schublade nur ein wenig angehoben und damit angekippt werden muss, damit das Rückhalteteil unter dem jeweiligen Haltestift hindurchgleiten kann. Dadurch wird vorteilhafterweise erreicht, dass Zuführschläuche vor Beschädigungen geschützt werden können.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine perspektivische Darstellung einer Gargeräteanordnung mit zwei Gargeräten, einer Abzugshaube sowie einem Untergestell mit einem Aufnahmebereich für Zubehör;
- Fig. 2A: eine perspektivische Darstellung einer erfindungsgemäßen Aufnahmebereich-Schublade zusammen mit einem Untergestell, wobei die Schublade aus dem Untergestell herausgefahren ist;
- Fig. 2B: eine Einzelheit gemäß Fig. 2A;
- Fig. 3: eine schematisch stark vereinfachte Darstellung einer weiteren Ausführungsform einer erfindungsgemäßen Gargeräteanordnung, und
- Fig. 4: eine entsprechende Darstellung einer Gargeräteanordnung gemäß Fig. 3, jedoch ohne Wasseraufbereitungspatrone.

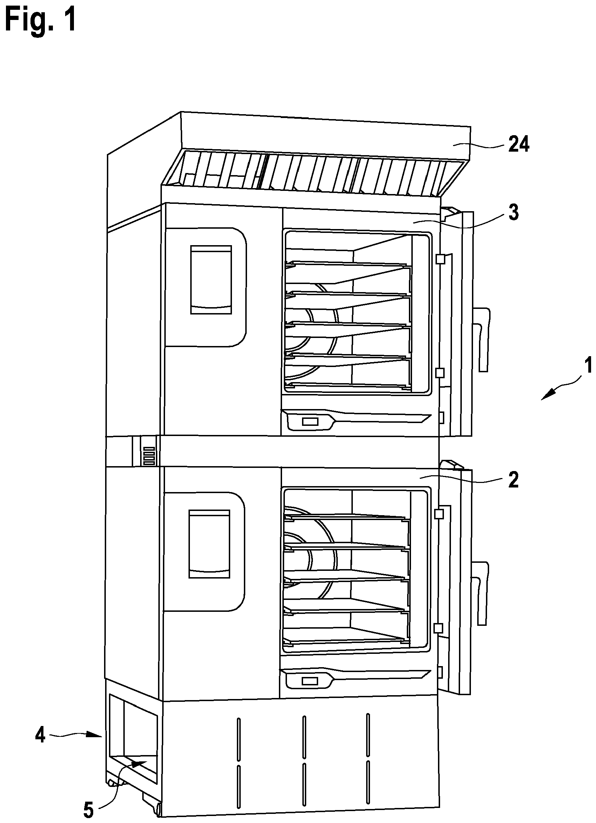

In Fig. 1 ist ein Beispiel einer erfindungsgemäßen Gargeräteanordnung 1 dargestellt, die insbesondere als gewerbliche Gargeräteanordnung ausgebildet sein kann.

Hierbei werden im Rahmen dieser Anmeldung unter dem Begriff "Gargerät" sowohl gewerbliche Gargeräte wie auch Haushalts-Gargeräte und insgesamt ganz allgemein Nahrungsmittel-Behandlungs-Geräte verstanden, die sowohl eine kalte wie auch eine heiße Behandlung von Nahrungsmitteln durchführen können und beispielsweise Heißluftdämpfer, Kombi-Dämpfer, Getränkeausgabe-Automaten, Geräte-Mixer, Mikrowellen-Geräte und andere Nahrungsmittel-Behandlungs-Geräte umfassen können.

Die in Fig. 1 dargestellte Gargeräteanordnung 1 weist zwei übereinandergestapelte Gargeräte 2 und 3 auf, die natürlich wie üblich einen durch eine Garraumtür verschließbaren Garraum sowie sämtliche Aggregate, wie beispielsweise ein Lüfter, eine Heizung sowie Steuer- und Regelgeräte umfassen, die bei derartigen Gargeräten vorhanden sind, deren Beschreibung jedoch für die Erläuterung der Prinzipien dieser Erfindung nicht erforderlich sind. Ferner ist bei der dargestellten Gargeräteanordnung 1 auf dem oberen Gargerät 3 eine Abzugshaube 24 angeordnet, deren Beschreibung für die Erläuterung der Prinzipien vorliegender Erfindung ebenfalls nicht erforderlich ist.

Das untere Gargerät 2 ist auf einem Untergestell 4 aufgesetzt, in dem ein Aufnahmebereich 5 vorgesehen ist, der zur Aufnahme von Gargeräte-Zubehör, wie insbesondere Flüssigkeitsbehältern und Wasseraufnahmepatronen dient. Auch andere Zubehörteile können in diesen Aufnahmebereich 5 untergebracht werden.

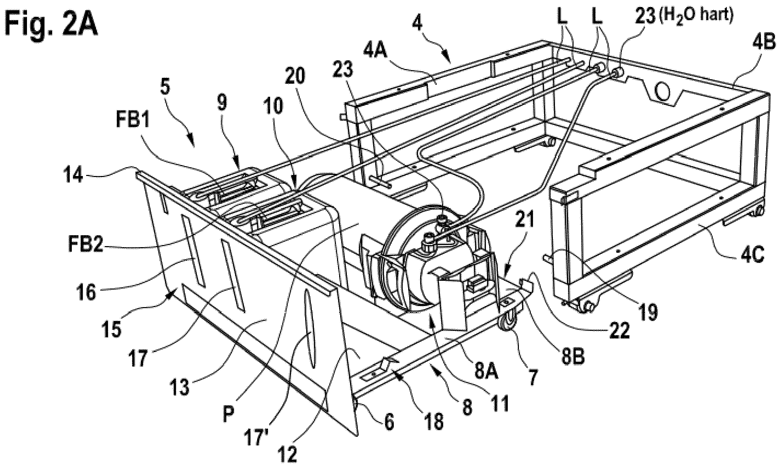

Fig. 2A zeigt die Ausführung des Aufnahmebereichs 5 in Form eines in das bzw. aus dem Untergestell 4 ein- und ausfahrbaren Aufnahmeschlittens, der auch als ein- und ausfahrbare Aufnahme-Schublade bezeichnet werden kann.

Wie Fig. 2A verdeutlicht, ist die Schublade 5 in einem Zustand dargestellt, in dem sie aus dem Untergestell 4 herausgezogen worden ist, wozu die Schublade 5 einen auf Rollen angebrachten Rahmen 8 aufweist. Insgesamt sind vier derartige Rollen in den Eckbereichen des Rahmens 8 vorgesehen, wobei in Fig. 2A aufgrund der gewählten Darstellung nur die Rollen 6 und 7 sichtbar sind.

Der Rahmen 8 weist bei der dargestellten Ausführungsform bevorzugterweise eine in Aufnahmeabschnitte 9, 10 und 11 unterteilbare Aufnahmeplatte 12 auf. Es ist natürlich möglich, mehr als drei Aufnahmeabschnitte auf der Aufnahmeplatte vorzusehen, was von der Anzahl der aufzunehmenden Zubehörkomponenten und deren Größe abhängt.

Der Rahmen 8 ist ferner mit einer frontseitigen Abdeckplatte 13 versehen, die bei der dargestellten besonders bevorzugten Ausführungsform mit einem am oberen Rand der Abdeckplatte 13 angeordneten Griff 14 versehen ist.

Die Aufnahmeabschnitte 9 und 10, die bei der dargestellten Ausführungsform für

Flüssigkeitsbehälter FB1 und FB2 vorgesehen sind, sind der Abdeckplatte 13 benachbart angeordnet. Dies macht es möglich, im Bereich 15 der Abdeckplatte, der den Abschnitten 9 und 10 benachbart ist, im Beispielsfalle zwei Füllstandsschlitze 16 und 17 vorzusehen, die beispielsweise mit jeweils einer Glasplatte abgedeckt sein können, so dass von außen der Füllstand in den Flüssigkeitsbehältern FB1 und FB2 auf einfache Art und Weise visuell kontrolliert werden kann. Die Anzahl der Füllstandsschlitze hängt natürlich von der Anzahl der zu überwachenden Flüssigkeitsbehälter ab, so dass es möglich ist, nur einen derartigen Füllstandsschlitz oder eine größere Anzahl von Füllstandsschlitzen in der Abdeckplatte 13 vorzusehen. So ist es beispielsweise möglich, neben den Flüssigkeitsbehältern FB1 und FB2 einen weiteren Behälter, beispielsweise als Reservebehälter oder als Fettabscheidebehälter, vorzusehen. Dies ist in Fig. 2A durch den zusätzlichen Füllstandsschlitz 17' symbolisiert, der in einem in Fig. 2A frei gebliebenen Bereich angeordnet ist, in dem der zuvor beschriebene weitere Behälter oder auch eine Mehrzahl derartiger Behälter angeordnet werden kann.

Wie Fig. 2A ferner verdeutlicht, weist das Untergestell 4 im Beispielsfalle drei offene Gestellrahmenteile 4A, 4B und 4C auf, die jeweils im rechten Winkel miteinander verbunden sind. Die Größe und Gestaltung dieses Untergestells 4 ist hinsichtlich der Ausführungsform gemäß der Fig. 2A rein beispielhaft, da diese natürlich vor allem von der Art und Größe der aufzusetzenden Gargeräte abhängig ist.

Am Einschubende des Untergestells 4 sind an den Rahmenteilen 4A und 4B in deren unteren Bereich Haltestifte 19 und 20 angeordnet, die mit Rückhaltefedern zusammenwirken können, die auf dem Rahmen 8 angeordnet werden können. Der Rahmen 8 weist bei der dargestellten Ausführungsform drei Rahmenteile auf, von denen die Rahmenteile 8A und 8B aufgrund der gewählten Darstellung sichtbar sind. Diese Rahmenteile 8A sind sowohl mit der Aufnahmeplatte 12 als auch der Abdeckplatte 13 verbunden. Auf dem Rahmenteil 8A ist eine Haltefeder 18 angeordnet, wobei üblicherweise zwei derartige Haltefedern 18 vorgesehen sind, so dass die zweite in Fig. 2A nicht sichtbare Haltefeder auf dem Rahmenteil des Rahmens 8 angeordnet ist, der parallel zum Rahmenteil 8A auf der anderen Seite der Frontplatte 13 angeordnet ist.

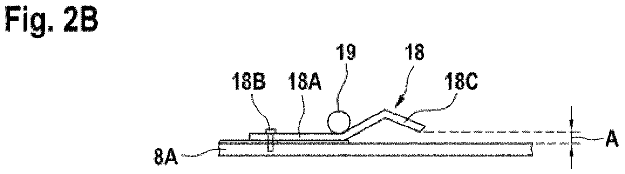

Die Detaildarstellung der Fig. 2B zeigt die Haltefeder 18 mit einem Befestigungsabschnitt 18A, der über ein Befestigungselement 18B, wie beispielsweise ein Niet, auf dem Rahmenteil 8A fixiert werden kann. An diesen Halteabschnitt 18A, der als Halteplatte ausgebildet sein kann, schließt sich ein federnder Halteabschnitt 18C an, der rampenförmig ausgebildet ist und dessen vorderes Ende einen Abstand A zur Oberfläche des Rahmenteils 8A einnimmt, so dass er beim Auflaufen auf den Haltestift 19 in Richtung auf das Rahmenteil 8A einfedern kann, so dass der Haltestift 19 beim Einfahren und Herausfahren der Schublade 5 über den Halteabschnitt 18C gleiten kann und im eingefahrenen Zustand die Stellung einnimmt, die aus Fig. 2B ersichtlich ist. In diesem Zustand hintergreift der Haltestift 19 den Halteabschnitt 18C der Haltefeder 18, so dass diese in ihrer in das Untergestell 4 eingefahrenen Position gesichert ist. Ferner verdeutlicht Fig. 2A, dass auf dem Rahmenteil 8A, benachbart zum Untergestell 4 ein Rückhalteteil (Rückhalteplatte) angeordnet ist, die vorzugsweise im rechten Winkel aufrecht stehend auf dem Rahmenteil 8A vorgesehen ist. Ein weiteres derartiges Rückhalteteil 22 kann auf dem Rahmenteil, das in Fig. 2A nicht sichtbar ist, angeordnet werden. Das bzw. die Rückhalteteile 22 können mit dem bzw. den Haltestiften 19 und 20 zusammenwirken und beim Herausziehen der Schublade 5 einen Anschlag bilden, damit die in Fig. 2A eingezeichneten Leitungen nicht beschädigt werden. Soll die Schublade 5 gänzlich aus dem Untergestell 4 herausgezogen werden, muss die Schublade nur leicht angekippt werden, damit das bzw. die Rückhalteteile 22 unter dem jeweiligen Haltstift 19 bzw. 20 hindurchgleiten können.

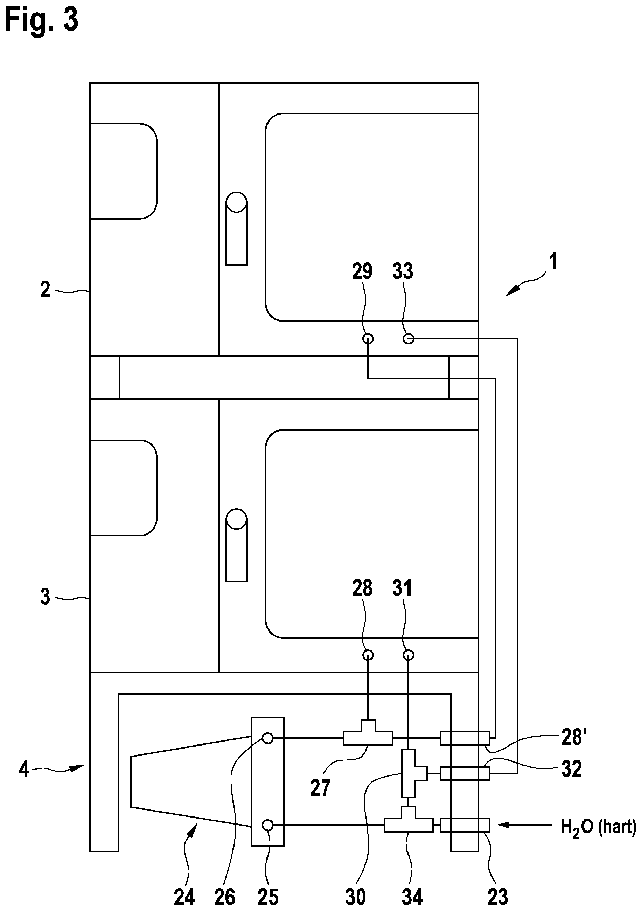

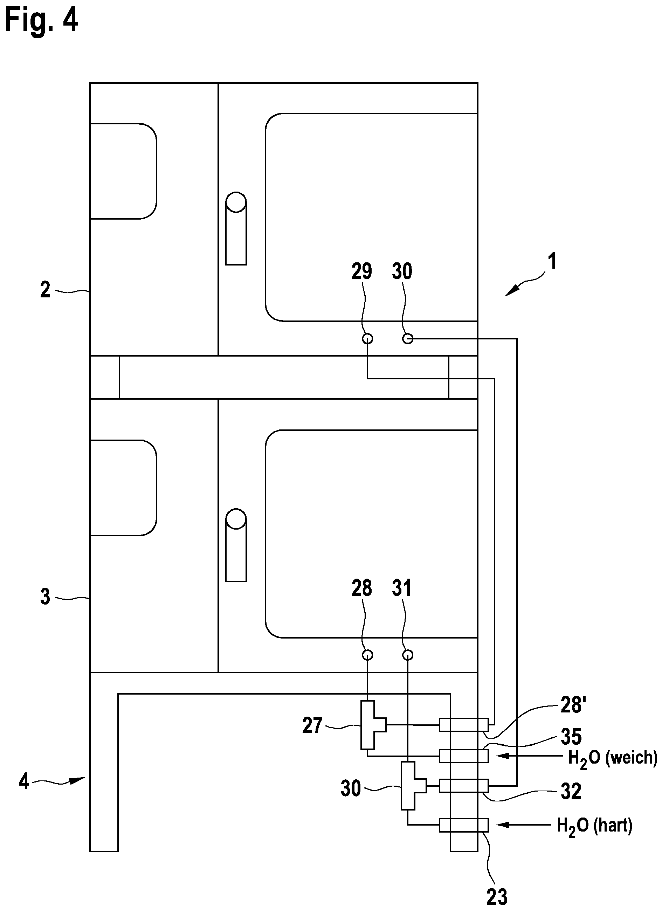

Wie Fig. 2A ferner verdeutlicht, weist die Schublade 5 bei dieser besonders bevorzugten Ausführungsform einen einzigen Hartwasseranschluss 23 auf, der mit einer Hartwasserzuleitung L in Strömungsverbindung steht. Das Wirkprinzip dieses einzigen Hartwasseranschlusses 23 wird nachfolgend anhand der Fig. 3 und 4 erläutert.

Fig. 3 stellt eine Gargeräteanordnung 1 dar, bei der wiederum zwei Gargeräte 2 und 3 übereinandergestapelt sind und auf ein Untergestell 4 aufgesetzt sind. Um die Prinzipien des einzigen Hartwasseranschlusses 23 erläutern zu können, ist bei der Ausführungsform gemäß Fig. 3 die Schublade mit ihren Komponenten weggelassen, wobei lediglich die Wasseraufbereitungspatrone P, hier mit der Bezugsziffer 24 identifiziert, dargestellt ist. Der Hartwasseranschluss 23 ist mit einem Verteiler in Form eines T-Stücks 34 verbunden, das eine Aufteilung des zugeführten Hartwassers in die Patrone 24 durch einen Zulauf 25 oder über ein weiteres T-Stück 30 in einen Zulauf 31 des unteren Gargeräts 3 und über das weitere T-Stück 30 und ein Verbindungsteil 32 in einen Hartwasseranschluss 33 des oberen Gargeräts 2 möglich macht. Alternativ können die diversen T-Stücke über ein einziges speziell geformtes Kunststoffteil ausgeführt werden.

Das der Patrone 24 über den Zulauf 25 zugeführte Hartwasser wird in der Patrone aufbereitet und kann über den Auslauf 26 als Weichwasser über ein T-Stück 27 dem Weichwasserzulauf 28 des unteren Gargeräts 3 und über eine weitere Leitung mit Zwischenstück 28' dem Weichwasserzulauf 29 des oberen Gargeräts 2 zugeführt werden. Der Vorteil dieser Anordnung ist insbesondere darin zu sehen, dass für den Anschluss der Gargeräteanordnung an die Wasserversorgung lediglich ein einziger Wasseranschluss in Form des Hartwasseranschlusses 23 erforderlich ist. Dies vereinfacht auch in großem Maße die Wartung, da für die Wartung nur eine einzige Hartwasserleitung vom Gerätekomplex getrennt werden muss. Die zuvor beschriebene Anordnung kann sowohl integraler Bestandteil der Schublade 5 gemäß Fig. 2A sein oder sie kann, wie in Fig. 3 dargestellt, auch Bestandteil einer Gargeräteanordnung 1 sein, die lediglich ein Untergestell 4 ohne eine Schublade 5, wie zuvor beschrieben, aufweist.

Eine alternative Anordnung einer derartigen Gargeräteanordnung 1 mit wiederum zwei übereinandergestapelten Gargeräten 2 und 3 und einem Untergestell 4 ist in Fig. 4 dargestellt. Im Unterschied zur Anordnung der Fig. 3 kann bei dieser Ausführungsform auf eine Filterpatrone verzichtet werden, da diese Anordnung für Installationen vorgesehen ist, die sowohl über Hartwasserzulauf und Weichwasserzulauf verfügen. Auch bei dieser Anordnung ist lediglich ein Hartwasseranschluss 23 vorgesehen, der über ein T-Stück 30 den Hartwasserzulauf 31 des unteren Gargeräts 3 und den Hartwasserzulauf 33 des oberen Gargeräts 2 versorgt. Ferner ist ein Weichwasserzulauf 35 vorgesehen, der über ein T-Stück 27 den Weichwasserzulauf 28 des unteren Gargeräts 3 und über das Zwischenstück 28' den oberen Weichwasserzulauf 29 des oberen Gargeräts 2 versorgt.

Neben der vorstehenden schriftlichen Offenbarung wird hiermit zur Ergänzung der Offenbarung der Erfindung explizit auf die zeichnerische Darstellung der Erfindung in den Fig. 1 bis 4 Bezug genommen.

**Bezugszeichenliste**

| | |
|---|---|
| 1 | Gargeräteanordnung |
| 2, 3 | Gargeräte |
| 4 | Untergestell |
| 5 | Aufnahmebereich |
| 6,7 | Rollen |
| 8 | Rahmen |
| 8A, 8B | Rahmenteile |
| 9, 10, 11 | Aufnahmeabschnitte |
| 12 | Aufnahmeplatte |
| 13 | Abdeckplatte |
| 14 | Griff |
| 15 | Bereich der Abdeckplatte |
| 16, 17 | Füllstandsschlitze |
| 17' | Schlitz für optionalen Behälter |
| 18 | Haltefeder |
| 18A | Halteabschnitt |
| 18B | Fixierungselement |
| 18C | Haltebereich |
| 19, 20 | Haltestifte |
| 21 | Endbereich |
| 22 | Rückhalteteil |
| 23 | Hartwasseranschluss |
| 24 | Abzugshaube25 Einlauf |
| 26 | Auslauf |
| 27 | T-Stück |
| 28, 29 | Weichwasserzulauf |
| 30 | T-Stück |
| 31 | Hartwasserzulauf |
| 32 | Verbindungsstück |
| 33 | Hartwasserzulauf |
| 34 | T-Stück |
| 35 | Weichwasserzulauf |
| A | Abstand |
| FB1, FB2 | Flüssigkeitsbehälter |
| P | Wasseraufbereitungspatrone |

## Patentansprüche

1. Gargeräteanordnung (1), insbesondere gewerbliche Gargeräteanordnung
- mit zumindest einem Gargerät (2, 3),
- mit einem Untergestell (4), auf dem das zumindest eine Gargerät (2, 3) angeordnet ist, und
- mit einem Aufnahmebereich (5) für Gargeräte-Zubehör, wie insbesondere Flüssigkeitsbehälter (FB1, FB2), Wasseraufbereitungspatronen (P), Zuführ- und Abführleitungen (L), der im Untergestell (4) platzierbar ist,
- wobei der Aufnahmebereich (5) als in das Untergestell (4) ein- und aus dem Untergestell (4) ausfahrbare Schublade ausgebildet ist, **dadurch gekennzeichnet,**
- **dass** die Schublade (5) mit einem einzigen Hartwasseranschluss (23) versehen ist.

2. Gargeräteanordnung nach Anspruch 1, **dadurch gekennzeichnet, dass** die Schublade (5) einen auf Rollen oder Führungsschienen (6, 7) angebrachten Rahmen (8) aufweist.

3. Gargeräteanordnung nach Anspruch 2, **dadurch gekennzeichnet, dass** im Rahmen (8) eine in Aufnahmeabschnitte (9, 10, 11) unterteilbare Aufnahmeplatte (12) angeordnet ist.

4. Gargeräteanordnung nach Anspruch 2 oder 3, **dadurch gekennzeichnet, dass** am Rahmen (8) eine frontseitige Abdeckplatte (13) angeordnet ist.

5. Gargeräteanordnung nach Anspruch 4, **dadurch gekennzeichnet, dass** die Abdeckplatte (13) mit einem Griff (14) versehen ist.

6. Gargeräteanordnung nach Anspruch 4 oder 5, **dadurch gekennzeichnet, dass** die Aufnahmeabschnitte (9, 10) für die Flüssigkeitsbehälter (FB1, FB2) der Abdeckplatte (13) benachbart angeordnet sind.

7. Gargeräteanordnung nach Anspruch 6, **dadurch gekennzeichnet, dass** die Abdeckplatte (13) im Bereich (15), der den Aufnahmeabschnitten (9, 10) benachbart ist, mit einer der Anzahl der Flüssigkeitsbehälter (FB1, FB2) entsprechenden Anzahl von Füllstandsschlitzen (16, 17, 17') versehen ist.

8. Gargeräteanordnung nach einem der Ansprüche 2 bis 7, **dadurch gekennzeichnet, dass** auf dem Rahmen (8) zumindest eine Haltefeder (18) angeordnet ist, die im in das Untergestell (4) eingefahrenen Zustand ein Haltestift (19, 20) hintergreift.

9. Gargeräteanordnung nach einem der Ansprüche 2 bis 8, **dadurch gekennzeichnet, dass** am dem Untergestell (4) zugewandten Endbereich (21) des Rahmens (8) zumindest ein Rückhalteteil (22) angeordnet ist.

10. Gargeräteanordnung nach einem der Ansprüche 1 bis 9, **dadurch gekennzeichnet, dass** der Hartwasseranschluss (23) mit einem Verteiler (34) verbunden ist.

11. Gargeräteanordnung nach einem der Ansprüche 1 bis 10, **dadurch gekennzeichnet, dass** der Hartwasseranschluss (23) über den Verteiler (34) mit einem Zulauf (25) einer Wasseraufbereitungspatrone (24) verbunden ist.

12. Gargeräteanordnung nach Anspruch 11, **dadurch gekennzeichnet, dass** die Wasseraufbereitungspatrone (24) über einen Auslauf (26) und einen weiteren Verteiler (27) mit einem Weichwasseranschluss (28 bzw. 29) eines Gargeräts (3 bzw. 2) verbunden ist.

13. Gargeräteanordnung nach einem der Ansprüche 1 bis 12, **dadurch gekennzeichnet, dass** der einzige Hartwasseranschluss (23) mit einer einzigen Hartwasserleitung (23) verbunden ist.
